# EUROPÄISCHE PATENTANMELDUNG

(11) **EP 1 584 870 A2**
(43) Veröffentlichungstag der Anmeldung: **12.10.2005**
(21) Anmeldenummer: 05005463.4
(22) Anmeldetag: 14.03.2005
(51) Int. Cl.: F23N 5/20, F23N 5/22

(54) **Gasventilanordnung mit Verzögerter Gasfreigabe**

(30) Priorität: 08.04.2004 DE 102004018057
(71) Anmelder: Karl Dungs GmbH & Co.KG, 73660 Urbach (DE)
(72) Erfinder: Berger, Siegfried, 73278 Schlierbach (DE); Warth, Jochen, 73660 Urbach (DE)
(74) Vertreter: Rüger, Barthelt & Abel Patentanwälte

(57) **Zusammenfassung**

Mit der vorgestellten Lösung wird die Drosseleinrichtung (29) einer Gasventilanordnung (1) zur Speisung eines Brenners (3) zunächst auf einen gewünschten Mindestdurchfluss eingestellt, der zur Zündung ausreichend ist. Sobald die Zündung des Brenners (3) festgestellt wird und/oder eine voreingestellte Zeit abgelaufen ist wird die Drosseleinrichtung (29) auf Nenndurchfluss eingestellt. Dieser kann durch verstellbare Anschläge oder durch eine durch einen Stellmotor anzufahrende z.B. softwaremäßig festgelegte Position gegeben sein. Der Brenner erreicht dann seine Betriebsleistung. Während des gesamten Zündvorgangs bleibt die dem Brenner zugeführte Luftmenge unverändert. Wird ein langsames Übergehen von der Brennerstartleistung auf die Brennernennleistung gewünscht kann die Betätigungseinrichtung, die z.B. einen Drosselschieber positioniert, entsprechend langsam betätigt werden. Die langsame Betätigung kann durch eine pneumatische oder hydraulische Bremsung eines Zugankers des Drosselschiebers (31) oder durch eine entsprechende Ansteuerung des Stellmotors erreicht werden.

## Beschreibung

Die Erfindung betrifft eine Gasventilanordnung, insbesondere zur Versorgung von Gasbrennern.

Gasventile, mit denen der Gasstrom zu Brennern freizugeben oder abzusperren ist, sind in der Regel Auf/Zu-Ventile, die über eine geeignete Antriebseinrichtung geöffnet und geschlossen werden. Die Freigabe des Gasstroms erfolgt dabei in einem Moment, zu dem an dem angeschlossenen Brenner noch keine Flamme ausgebildet ist. Erfolgt der Zündvorgang dann mit dem die Nennleistung des Brenners bestimmenden Gasstrom ist die Zündung meist heftig und nicht in jedem Fall wirklich kontrolliert. Dies gilt es zu verhindern.

Dazu schlägt die DE 100 06 600 A1 ein Gasventil vor, das, wenn es ein Startsignal empfängt, den Gasstrom nicht sofort mit voller Leistung sondern verzögert und langsam ansteigend freigibt. Dazu ist das Ventil mit einem pneumatischen Servostellantrieb versehen, der pneumatisch gedämpft ist. Er enthält ein Pilotventil, das die Änderung des Differenzdrucks in einem Membranantrieb steuert. Der für das Öffnen des Ventils zuständige Steuerkanal enthält dabei eine Drossel, die den Aufbau des Differenzdrucks verlangsamt. Zusätzlich ist an dem Ventilverschlussglied des Gasventils eine Drosselscheibe befestigt, die durch eine Feder gegen einen Ventilsitz gespannt ist. Die Drosselscheibe enthält mittig einen Durchbruch, in dem ein kegelförmiger Abschnitt der Ventilspindel sitzt. Öffnet das Ventil bleibt die Drosselscheibe zunächst auf dem Ventilsitz liegen und versperrt den Gasstrom. Lediglich der sich mit zunehmender Fortbewegung der Ventilspindel vergrößernde ringförmige Spalt zwischen dem kegelförmigen Ende der Ventilspindel und der Öffnung der Drosselscheibe lässt einen seitlich ansteigenden Gasstrom durch, der die Zündgasmenge bildet.

Solche Ventile haben sich insbesondere für Anwendungen bei kleinerer Leistung bewährt. Jedoch beruht das Prinzip zwingend auf einem Stellantrieb, der der Ventilspindel eine langsame Öffnungsbewegung erteilt. Insbesondere bei mit Magnetantrieben ausgerüsteten Ventilen ist dies nicht ganz einfach zu erreichen.

Aus der DE 101 07 194 C1 ist ein Gasventil bekannt, das über einen Zugmagneten betätigt wird. Das Ventilverschlussglied weist mittig eine Zündgasdüse auf, die von einem kegelförmigen Ende der Ventilspindel betätigt wird. Sie versorgt einen gesonderten Zündgaskanal. Das Ventilverschlussglied des Hauptventils sitzt mit axialem Spiel auf der Ventilspindel.

Diese Anordnung hat sich grundsätzlich bewährt. Allerdings muss der Zugmagnet nicht nur den Hub für das Öffnen des Hauptventils sondern zusätzlich den Hub für das Öffnen des Zündgasventils überwinden. Je größer der von dem Anker des Zugmagneten zu vollführende Hub ist desto größer ist der Magnetantrieb insgesamt und desto größer ist die aufzuwendende elektrische Leistung. Dies kann sich insbesondere bei besonders großen Gasventilen hinderlich bemerkbar machen.

Des Weiteren ist es nicht ganz einfach, die genannten Ventile auf geänderte Anforderungen, wie beispielsweise geänderte Volllastanforderungen oder geänderte Zündgasanforderungen anzupassen. Auch ist die Dauer des Zündgasbetriebs baulich festgelegt.

Davon ausgehend ist es Aufgabe der Erfindung, eine insbesondere zur Versorgung von Gasbrennern geeignete Gasventilanordnung zu schaffen, die variabel einsetzbar ist und einen kontrollierten Betrieb der Brenner, insbesondere beim Zünden derselben, gestattet.

Diese Aufgabe wird mit der Gasventilanordnung nach Anspruch 1 gelöst:

Die erfindungsgemäße Gasventilanordnung beinhaltet ein Absperrventil, das einer Steuereinrichtung untersteht, zumindest einen Druckregler, der mit dem Absperrventil in Serie angeordnet ist, eine nachgeordnete Drosseleinrichtung, die wiederum mit dem Druckregler und dem Absperrventil in Serie angeordnet ist und eine Betätigungseinrichtung, die unter der Regie der Steuereinrichtung die Drosseleinrichtung verstellen kann. Damit kann der Gasstrom, der dem Brenner zum Zünden zugeleitet wird, auf einen definierten Wert einreguliert und eingestellt werden, der niedriger als der sonst gelieferte Gasstrom ist. Es ist somit ein kontrolliertes weiches Zünden des Brenners möglich. Die Betätigung der Drosseleinrichtung über eine gesonderte Betätigungseinrichtung auf von der Steuereinrichtung kontrollierte Weise ermöglicht es sehr einfach, nicht nur unterschiedliche Zündgasströme einzustellen sondern es ist auch möglich, durch einfache Maßnahmen, die lediglich die Steuereinrichtung betreffen, unterschiedliche Zeitspannen festzulegen, für die der nachgeschaltete Brenner lediglich mit Zündgas, d.h. gedrosseltem Gasstrom, versorgt wird. Auf diese Weise können unterschiedliche Leitungslängen, unterschiedliche Brennergeometrien, sowie unterschiedliche Brennraumgeometrien auf einfache Weise angepasst werden. Durch die Entkopplung von Absperrventil und Drosseleinrichtung können einerseits die Absperrventile und andererseits die Drosseleinrichtung baulich optimiert werden. Dies hat insbesondere für große Gasventile, d.h. für Ventile Bedeutung, die Brennerleistungen oberhalb 50 kW zu versorgen haben. Jedoch kann die Erfindung auch bei kleineren Gasventilanordnungen Anwendung finden.

Bei einer bevorzugten Ausführungsform ist der Druckregler zwischen der Drosseleinrichtung und dem Absperrventil angeordnet. Vorzugsweise erfolgt das Zünden nach folgendem Schema. Zunächst wird die Drosseleinrichtung auf den Drosselwert (Zündgasmenge) eingestellt. Sodann wird das Absperrventil geöffnet, so dass der Druckregler in dem Zwischenraum zwischen dem Druckregler und der Drosseleinrichtung einen definierten Gasdruck einstellt. Dieser Druckwert hängt nur von der Einstellung des Druckreglers, nicht aber von der Einstellung der Drosseleinrichtung ab. Damit findet die Drosseleinrichtung unabhängig von Ihrer Stellung jeweils einen konstanten Eingangsdruck vor, so dass ihre Einstellung einen gewünschten Gasstrom sehr genau festlegt. Nach Ablauf einer z.B. von einem Zeitglied, das Teil der Steuereinrichtung sein kann, festgelegten Wartezeit und/oder auf ein anderes externes Signal hin, gibt die Drosseleinrichtung dann den gewünschten Betriebsgasstrom frei, indem es in Freigabestellung überführt wird. Auch hier regelt der Druckregler wiederum den vorgegebenen Druck vor der Drosseleinrichtung ein.

Die beschriebene Vorgehensweise gilt insbesondere für eine Ausführungsform, bei der die Drosseleinrichtung als Zweipunktantriebseinrichtung ausgebildet ist. Der Zündgasstrom wie auch der Betriebsgasstrom können jeweils durch gesonderte Stellschrauben eingestellt werden, die z.B. den oberen und den unteren Anschlag eines Drosselschiebers festlegen. Alternativ können auch Drosselklappen oder andere Drosseleinrichtungen Anwendung finden, die zwischen zwei Anschlägen verstellbar ausgebildet sind.

Es wird jedoch auch als vorteilhaft angesehen, die Betätigungseinrichtung der Drosseleinrichtung als variabel positionierbare Stelleinrichtung, insbesondere als nahezu oder gänzlich stufenlos positionierbare Stelleinrichtung auszubilden. Diese Maßnahme hat den Vorteil, dass gegebenenfalls auf verstellbare Anschläge des Drosselglieds oder Drosselschiebers gänzlich verzichtet werden kann. Die Einstellung der Zündgasmenge und/oder der beispielsweise softwaretechnisch erfolgen. Auch eröffnet diese Ausbildung die Möglichkeit der Durchführung einer abgestuften oder auch einer stufenlosen Stellbewegung, um einen gleitenden Übergang von Zündbetrieb zu regulärem Betrieb zu schaffen. Letztendlich kann eine stufenlose' oder gestufte Beeinflussung der Brennerleistung erreicht werden, die auch zur Leistungsregulierung derselben bei Normalbetrieb genutzt werden kann. Dies wird als Zusatznutzen angesehen.

Eine stufenlose Verstellung des Drosselglieds, beispielsweise durch einen Stellmotor wird auch in weiterer Hinsicht als vorteilhaft angesehen. Beispielsweise kann die Drosseleinrichtung zum Start des Brenners zunächst ganz geschlossen werden, wonach das Absperrventil geöffnet wird, um dem Druckregler Zeit zu geben, den Druck in dem Zwischenraum zwischen Druckregler und Drosseleinrichtung auf den gegebenen Wert einzuregulieren. Ausgehend von diesem definierten Anfangszustand kann die Drosseleinrichtung dann in Drosselstellung überführt werden, um die Zündgasmenge freizugeben. Das Überführen in Freigabestellung kann dann wiederum nach Ablauf einer vorgegebenen Wartezeit durch das Zeitglied oder wie auch schon bei den vorstehend angedeuteten Ausführungsformen durch ein externes Signal erfolgen. Das externe Signal kann beispielsweise von einem Flammendetektor herrühren, der das Zünden des Brenners überwacht und ein Freigabesignal liefert, wenn sich eine stabile Flamme ausgebildet hat.

Der Stellmotor wird vorzugsweise als Schrittmotor ausgeführt. Dies hat den Vorzug, dass unterschiedliche Drosselstellungen des Drosselglieds der Drosseleinrichtung einstellbar sind ohne einen Positionssensor vorsehen zu müssen. Allerdings erfordert der Schrittmotor eine sorgfältige Ansteuerung, damit keine Schrittfehler vorkommen. Besteht die Gefahr von Schrittfehlern ist es zweckmäßig, den Schrittmotor gelegentlich zu nullen, beispielsweise indem er eine Anschlagposition anfährt. Diese kann beispielsweise die Freigabeposition der Drosseleinrichtung oder eine oberhalb der Freigabeposition liegende Stellung sein. Die Nullstellung kann auch durch die Absperrposition des Drosselglieds festgelegt sein. Sie wird dann bei oben beschriebenem Schema, insbesondere beim Starten des Brenners jeweils neu angefahren, wenn der Drosselschieber vor dem eigentlichen Brennerstart jeweils ganz geschlossen wird.

Weitere Einzelheiten vorteilhafter Ausführungsformen der Erfindung sind Gegenstand der Zeichnung, der Beschreibung oder von Ansprüchen. In der Zeichnung sind Ausführungsbeispiele der Erfindung veranschaulicht. Es zeigen:
- Figur 1: die erfindungsgemäße Gasventilanordnung in schematisierter Darstellung,
- Figur 2: die Gasventilanordnung nach Figur 1 in schematisierter Funktionsdarstellung,
- Figur 3: die Drosseleinrichtung der Gasventilanordnung nach Figur 2 in einer schematisierten Schnittdarstellung,
- Figur 4: eine abgewandelte Ausführungsform der Drosseleinrichtung der Gasventilanordnung nach Figur 2 in schematisierter längs geschnittener Darstellung,
- Figur 5: eine abgewandelte Ausführungsform der Drosseleinrichtung der Gasventilanordnung nach Figur 2 in schematisierter längs geschnittener Darstellung,
- Figur 6: die Drosseleinrichtung entsprechend Figur 4 in abgewandelter Ausführungsform und
- Figur 7: eine im Ruhezustand offene Drosseleinrichtung für eine Gasventilanordnung nach Figur 2.

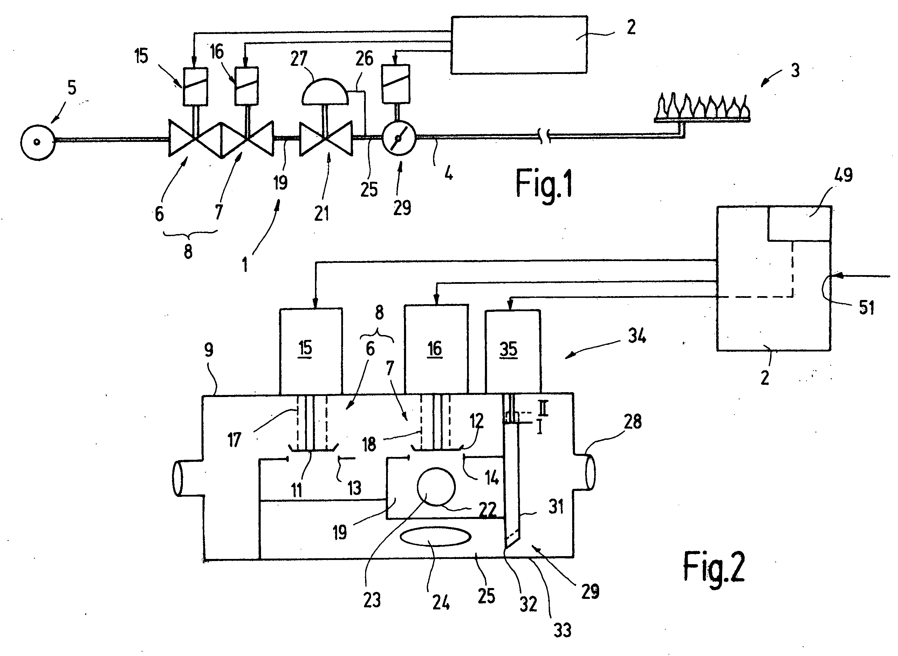

In Figur 1 ist eine auch als Gasstraße bezeichnete Gasventilanordnung 1 veranschaulicht, die von einer Steuereinrichtung 2 gesteuert wird und zur Versorgung eines Brenners 3 dient. Die Gasventilanordnung 1 ist in die dem Brenner 3 speisende Leitung 4 eingebaut und steuert den Gaszufluss von einer Gasquelle 5, beispielsweise einer Leitung des Gasnetzes, zu dem Brenner 3.

Zu der Gasventilanordnung 1 gehört zumindest ein Absperrventil 6. Im vorliegenden Ausführungsbeispiel ist dieses mit einem weiteren Absperrventil 7 zu einem Ventilblock 8 vereinigt, der, wie Figur 2 zeigt, in einem gemeinsamen Gehäuse 9 untergebracht ist. Prinzipiell können die Absperrventile 6, 7 jedoch auch getrennt sein. Die Absperrventile 6, 7 weisen jeweils ein Ventilverschlussglied 11, 12 auf, dem in dem Gehäuse 9 ausgebildete Ventilsitze 13, 14 zugeordnet sind. Die Betätigung der Ventilverschlussglieder 11, 12 erfolgt über Zugmagnete 15, 16. Diese sind an die Steuereinrichtung 2 angeschlossen und empfangen von diesen Steuersignale. Die Steuersignale werden durch die vorhandenen oder nicht vorhandenen Erregerströme der Zugmagnete 15, 16 gebildet. Schließfedern 17, 18 spannen die Ventilverschlussglieder 11, 12 in Schließrichtung gegen die Ventilsitze 13, 14 vor.

Das stromabwärtig angeordnete Absperrventil 9 reguliert den Gaszustrom zu einem Gehäuseinnenraum 19, der zu einem Druckregler 21 führt. Dieser in Figur 1 schematisch ersichtliche Druckregler 21 ist an das Ventilgehäuse 9 beispielsweise seitlich angebaut. In Figur 2 ist er anhand seines in einer Gehäuseöffnung 22 sitzenden Reguliertellers 23 veranschaulicht. Dieser reguliert den durchgelassenen Gasstrom, der über eine Gehäuseöffnung 24 in einen Innenraum 25 des Gehäuses 9 eintritt. Der Innenraum 25 wird somit bei geöffneten Absperrventilen 6, 7 auf konstantem Gasdruck gehalten. Von dem Innenraum 25 führt eine Impulsleitung 26 (Figur 1) zu einem pneumatischen Druckregelantrieb 27 des Druckreglers.

Der Innenraum 25 ist mit einem Ausgang 28 des Gehäuses 9 verbunden, wobei zwischen dem Ausgang 28 und dem Innenraum 25 eine Drosseleinrichtung 29 angeordnet ist. Die Drosseleinrichtung 29 ist somit in das Ventilgehäuse 9 integriert, so dass die Absperrventile 6, 7, der Druckregler 21 und die Drosseleinrichtung 29 ein abgeschlossenes Gerät bilden.

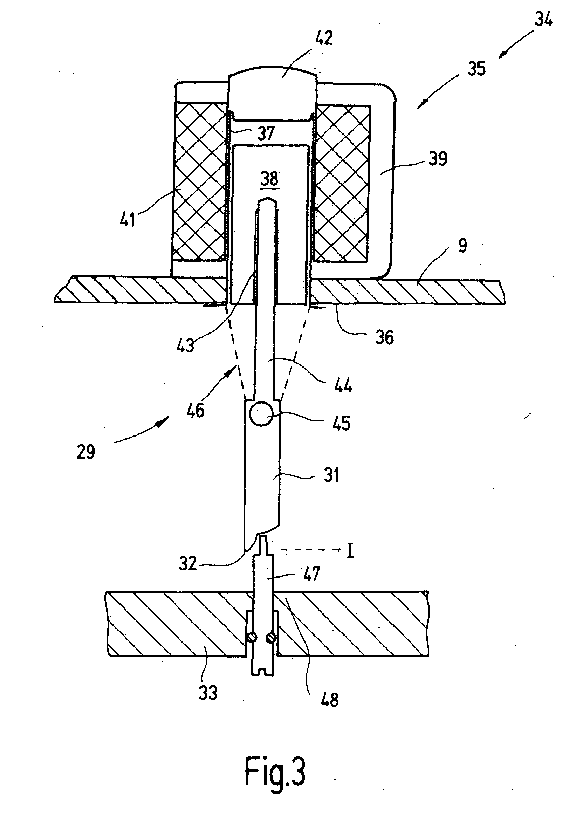

Zu der Drosseleinrichtung 29 gehört ein Drosselelement oder Drosselglied, das im vorliegenden Ausführungsbeispiel als Drosselschieber 31 ausgebildet ist. Dieser Drosselschieber weist z.B. eine Drosselkante 32 auf, die mit dem gegenüber liegenden Gehäuseboden 33 einen Drosselspalt variabler Breite bilden kann. Zur Verstellung der Breite des Drosselspalts ist der Drosselschieber 31 verschiebbar, verschwenkbar oder sonstwie beweglich gelagert. Er kann somit zumindest zwischen zwei Stellungen, nämlich einer Drosselstellung I und einer Freigabestellung II verstellt werden. Zum Antrieb dient eine Betätigungseinrichtung 34, die im vorliegenden Ausführungsbeispiel im Wesentlichen durch einen Zugmagneten 35 gebildet ist. Der Aufbau desselben geht für ein einfaches Ausführungsbeispiel aus Figur 3 hervor. Zu der Betätigungseinrichtung 34 gehört eine an eine Gehäuseöffnung 36 gasdicht angesetzte Hülse 37, die das Gehäuse 9 an der Gehäuseöffnung 36 gasdicht abschließt und einen Anker 38 beherbergt. Dieser ist in der Hülse 37 axial verschiebbar gelagert. Außen wird die Hülse 37 von einem Joch 39 übergriffen, das den magnetischen Fluss einer Spule 41 führt. Ein oberes Polstück 42 schließt die Hülse nach oben gasdicht ab und führt dem Anker 38 den magnetischen Fluss an seiner Stirnseite zu.

Der Anker 38 kann mit einer zentrischen Gewindebohrung 43 versehen sein, in die eine mit Außengewinde versehene Stellstange 44 eingeschraubt ist. Die Stellstange ist an ihrem unteren Ende z.B. drehbar mit dem Drosselschieber 31 verbunden. Es kann eine Kugelkopfverbindung 45 vorgesehen sein. Außerdem kann eine Feder 46, z.B. eine Druckfeder, vorgesehen sein, um den Anker 38 in seine abgefallene Stellung und somit den Drosselschieber 31 in seine Drosselposition hin vorzuspannen.

Zur Einstellung der in Figur 3 veranschaulichten Drosselstellung I kann eine verstellbare Anschlagschraube 47 vorgesehen sein, die abgedichtet in einer Gewindebohrung 48 des Gehäuses 9 sitzt. Sie gestattet die Einstellung der Spaltweite zwischen der Drosselkante 32 und dem Gehäuseboden 33. Die Einstellung der Freigabestellung kann durch Verdrehen der Stellstange 44 gegen den Anker 38 erfolgen.

Der Zugmagnet 35 ist an die Steuereinrichtung 2 oder eine gesonderte Steuereinrichtung angeschlossen. In letzterem Fall werden die Steuereinrichtungen der Zugmagnete 15, 16 und die separate Steuereinrichtung des Zugmagneten 35 als gemeinsame Steuereinrichtung angesehen. Die Steuereinrichtung 2 kann beispielsweise ein Zeitglied 49 enthalten, das nach Empfang eines Startsignals an einem Eingang 51 der Steuereinrichtung gestartet wird und den Zugmagneten 35 gegenüber den Zugmagneten 15, 16 verzögert bestromt. Anstelle des Empfangs eines externen Startsignals kann dieses auch von der Steuereinrichtung 2 selbst erzeugt werden.

Die insoweit beschriebene Gasventilanordnung 1 arbeitet wie folgt:

Im Ruhezustand sind die Zugmagnete 15, 16, 35 stromlos. Somit sind die Absperrventile 6, 7 geschlossen und der Drosselschieber 31 befindet sich in Drosselstellung I (veranschaulicht in Figur 3).

Empfängt die Steuereinrichtung 2 nun ein Steuersignal an ihrem Eingang 51 oder wird auf anderem Wege ein Öffnen der Gasventilanordnung 1 initialisiert erhalten zunächst die Zugmagnete 15, 16 Erregerstrom. Es öffnen somit die Absperrventile 6, 7. Der Drosselschieber 31 verbleibt jedoch zunächst in Drosselstellung. Der Druckregler 21 reguliert in dem Innenraum 25 den Solldruck ein. Dieser erzeugt an dem Drosselspalt einen definierten Gasstrom, der dem Zündgasstrom entspricht. Der Brenner 3 erhält somit Zündgasstrom und kann mit diesem Gasstrom, d.h. mit reduzierter Leistung gezündet werden.

Das Zeitglied 49 ist auf eine Zeit eingestellt, innerhalb derer mit Sicherheit ein Zünden des Brenners 3 erfolgt. Optional kann eine Sicherheitsschaltung vorgesehen sein, die den Zündvorgang abbricht, wenn nicht innerhalb einer gegebenen Zeitspanne keine konstante Flamme festgestellt wird. Diese Zeitspanne ist vorzugsweise kürzer als die von dem Zeitglied 49 vorgelegte Zeitspanne.

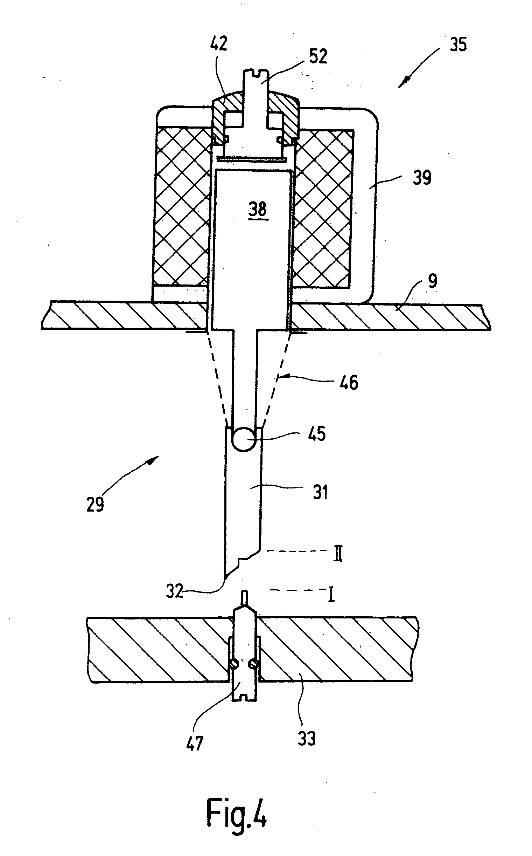

Mit Ablauf der von dem Zeitglied 49 vorgegebenen Zeit erhält der Zugmagnet 35 Erregerstrom. Er wird damit aktiviert und der Anker 38 wird in seine in Figur 4 obere Position gezogen. Dadurch wird der Drosselschieber 31 in Freigabestellung überführt und der Nenngasstrom wird freigegeben.

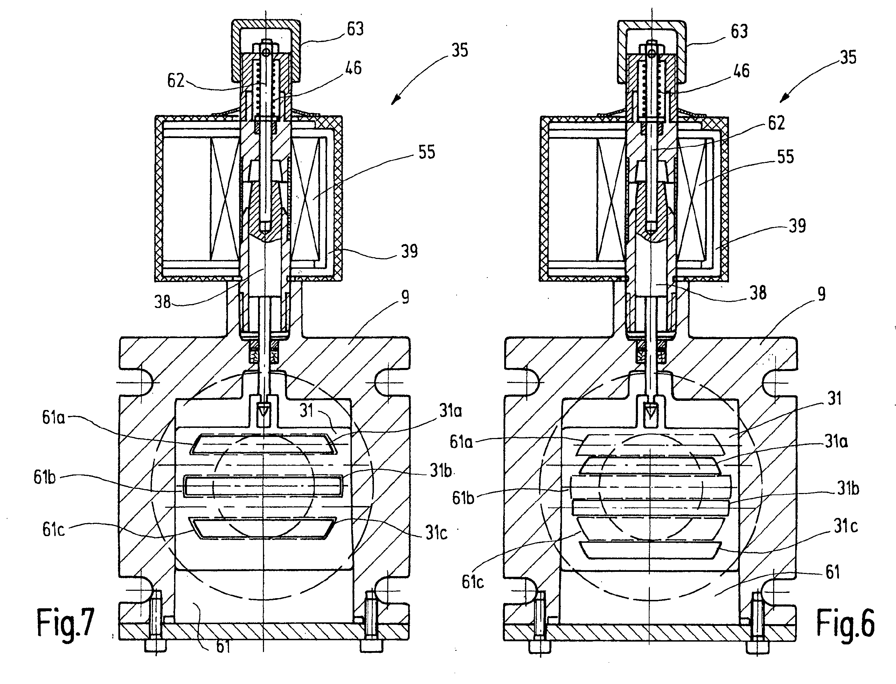

Figur 6 veranschaulicht eine Ausführungsform der magnetbetätigten Schieberanordnung, die mit einem besonders kurzen Magnethub auskommt. Der Drosselschieber 31 weist mehrere Fenster 31a, 31b, 31c auf, die mit entsprechenden schlitzartigen Fenstern einer feststehenden Blende in Übereinstimmung gebracht werden können. Zwischen den Fenstern 31a, 31b, 31c befinden sich Stege, deren Breite etwa so groß ist wie der maximale Hub des Ankers 38. Ist der Zugmagnet 35 stromlos befindet sich der Anker 38 und mit ihm der Drosselschieber 31 in einer unteren Totlage, in der die Fenster 31a bis 31c genau zwischen Öffnungen 61a bis 61c einer Blende 61 stehen. Die Blende 61 ist im Übrigen so angeordnet und ausgebildet, dass sie den Strömungsquerschnitt des Gehäuses 9 versperrt.

Zieht der Zugmagnet 35 an werden die Fenster 31a bis 31c in weitgehende Übereinstimmung mit den schlitzartigen Öffnungen 61a bis 61c gebracht, so dass der Gasstrom im Wesentlichen ungedrosselt frei gegeben wird. Die Breite der Öffnungen 61a bis 61c sowie der Fenster 31a bis 31c ist so groß, dass die jeweiligen Schlitze fast von Wand zu Wand des Gehäuses 9 reichen. Die Breite der Schlitze entspricht, wie erwähnt, dem Hub des Ankers 38. Die Feder 46 ist vorzugsweise außerhalb des Gehäuses 9, z.B. an dem oberen Ende des Zugmagneten 35, angebracht. Der Anker 38 kann mit einer Druckstange 62 verbunden sein, die ein oberes Flussleitstück des Magnetkreises abgedichtet durchsetzt und auf der die Feder 46 sitzt.

Beim Abschalten des Brenners 3 werden alle drei Zugmagnete 15, 16, 35 stromlos, so dass die Absperrventile 6, 7 schließen und der Drosselschieber 31 wieder in Drosselstellung überführt wird.

Bei dem vorbeschriebenen Ausführungsbeispiel muss der Zugmagnet 35 während der gesamten Zeit des Brennerbetriebs bestromt werden. Falls dies nicht erwünscht ist kann die Kinematik der Betätigungseinrichtung 34 auch umgekehrt werden und zwar in dem Sinne, dass die Feder 46 das Offenhalten des Drosselschiebers 31 bewirkt. Der Zugmagnet 35 wird dann so angeordnet, dass bei seiner Aktivierung der Drosselschieber 31 in Drosselstellung überführt wird. Diese Anordnung hat den grundlegenden Vorteil, dass eine Bestromung des Zugmagneten 35 nur während der kurzen Zündphase des Brenners erfolgen muss, in der dieser die reduzierte Zündgasmenge und nicht die normale Betriebsgasmenge erhält. Ein solches Ausführungsbeispiel ist in Figur 7 veranschaulicht. Es unterscheidet sich von dem Ausführungsbeispiel gemäß Figur 6 im Wesentlichen lediglich hinsichtlich der Anordnung der Fenster 31a bis 31c und der Öffnungen 61a bis 61c in Bezug aufeinander. Diese sind so angebracht, dass die Fenster 31a bis 31c im Wesentlichen deckungsgleich mit den Öffnungen 61a bis 61c übereinstimmen, wenn der Zugmagnet 35 stromlos ist. Wie schon bei dem Ausführungsbeispiel nach Figur 6, weisen die Fenster 31a, 31b, 31c in Zugrichtung des Zugmagneten (Vertikalrichtung in Figur 7) eine etwas geringere Breite auf als die entsprechenden Öffnungen 61a, 61b, 61c. Dadurch können die zwischen den Fenstern 31a bis 31c vorhandenen Stege die Öffnungen 61a bis 61c sicher abdecken, wenn der Zugmagnet 35 anzieht. Zum temporären Drosseln des Gasstroms muss der Zugmagnet 35 somit lediglich kurzzeitig bestromt werden. Die Fenster 31a bis 31c werden dann dem Hub des Zugmagneten 35 entsprechend gegen die Öffnungen 61a bis 61c verschoben, wodurch der Gasstrom mehr oder weniger gedrosselt wird. Das Maß der Drosselung kann z.B. mit einer Einstellkappe 63 reguliert werden, die als Anschlag für die Druckstange 62 wirkt. Die Einstellkappe kann auf ein Außengewinde eines rohrförmigen Fortsatzes aufgeschraubt sein, der die Druckstange 62 und ggf. die Feder 46 umgibt.

Eine abgewandelte Ausführungsform der Drosseleinrichtung 29 ist in Figur 4 veranschaulicht. Die Besonderheit besteht hier darin, dass sowohl die Drosselstellung I als auch die Freigabestellung II jeweils durch extern zugängliche Stellschrauben, nämlich zum einen die Anschlagschraube 47 und zum anderen eine an dem Zugmagneten 35 angeordnete Anschlagschraube 52 einstellbar ist. Die Anschlagschraube 52 ist beispielsweise in das obere Polstück 42 eingebaut. Sie kann dort abgedichtet in einer entsprechenden Gewindebohrung 53 sitzen. Sie kann, wie dargestellt, selbst als magnetisch leitfähiges Polstück ausgebildet sein. Im Übrigen trifft die Funktionsbeschreibung der vorigen Ausführungsform entsprechend auf diese Ausführungsform gemäß Figur 4 zu. Unter Zugrundelegung gleicher Bezugszeichen wird somit auf die vorige Beschreibung verwiesen.

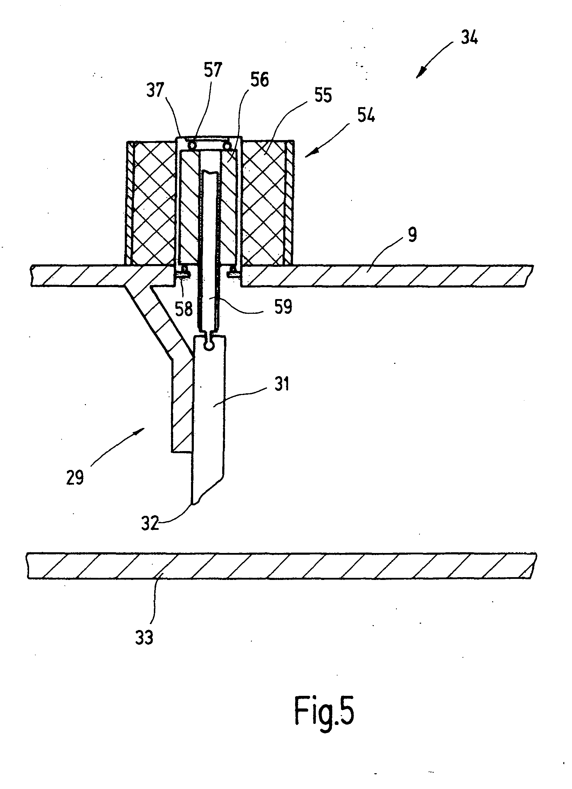

Eine weiter abgewandelte und ebenfalls als vorteilhaft angesehene Ausführungsform der Drosseleinrichtung 29 ist in Figur 5 veranschaulicht. Soweit nicht ausdrücklich anderes beschrieben ist, wird unter Zugrundelegung gleicher Bezugszeichen auf die vorige Beschreibung verwiesen.

Im Unterschied zu den vorherigen Ausführungsformen kann der Drosselschieber 31 bei der Ausführungsform nach Figur 5 kontrolliert in mehrere Stellungen überführt werden, wobei die Stellbewegung willkürlich verlangsamt werden kann. Als Betätigungseinrichtung 34 dient hier ein Stellmotor 54 mit einer ein Drehfeld erzeugenden äußeren Wicklung 55 und einem vorpolarisierten Abwehr permanentmagnetischen Anker 56. In dem Luftspalt ist wiederum die die Gasdichtigkeit herbeiführende Hülse 37 angeordnet. Der Anker 56 ist innerhalb der Hülse 37 drehbar gelagert. Dazu dienen z.B. axiale Drucklager 57, 58.

Der Anker 56 ist mit einer Gewindebohrung versehen, in der eine drehfest an dem Drosselschieber 31 gehaltene Gewindespindel 59 sitzt. Diese setzt die Drehbewegung des Ankers 56 in eine lineare Stellbewegung für den Drosselschieber 31 um. Die Steuereinrichtung 2 steuert den Stellmotor 54 in der einen oder der anderen Drehrichtung an, um den Drosselschieber 31 mehr oder weniger zu öffnen oder zu schließen. Der Vorzug dieser Ausführungsform liegt darin, dass eine Bestromung des Stellmotors 54 lediglich zur Durchführung der Stellbewegung erforderlich ist. Solange der Brenner ordnungsgemäß brennt und nicht gezündet werden muss ist er stromlos.

Bei dieser Ausführungsform sind mehrere Betriebsarten alternativ einstellbar. Z.B. kann der Stellmotor 54 bei jedem Abschalten des Brenners (Schließen der Absperrventile 6, 7) in Schließstellung überführt werden, so dass die Drosselkante 32 auf dem Gehäuseboden 33 aufsetzt. Dies ist eine Schließstellung, die für den Stellmotor 54 einen definierten Nullpunkt darstellt. Ist der Stellmotor 54 beispielsweise als Schrittmotor ausgebildet; kann sich die Steuereinrichtung in diesem Fall darauf verlassen, dass der Drosselschieber 31 in vorgegebener Position steht. Beim Aktivieren des Brenners werden dann zunächst die Absperrventile 6, 7 geöffnet, woraufhin der Druckregler in dem dem Drosselschieber 31 vorgelagerten Raum einen definierten Gasdruck aufbaut. Sodann kann der Drosselschieber 31 mit vorgegebener Geschwindigkeit oder mit einer vorgegebenen Bewegungskurve (Spaltweite über der Zeit) geöffnet werden. Dies kann sowohl stetig als auch in Schritten oder nach vorgegebenen Funktionen geschehen. Damit lassen sich variable Zündregime einstellen, bei denen z.B. mit langsam ansteigenden Gasströmen gearbeitet wird. Es ist auch möglich, zunächst eine Zündgasmenge einzustellen, von der ausgehend die Betriebsgasmenge gleitend oder langsam ansteigend oder in Stufen eingestellt wird.

Mit der vorgestellten Lösung wird die Drosseleinrichtung 29 einer Gasventilanordnung 1 zur Speisung eines Brenners 3 zunächst auf einen gewünschten Mindestdurchfluss eingestellt, der zur Zündung ausreichend ist. Sobald die Zündung des Brenners 3 festgestellt wird und/oder eine voreingestellte Zeit abgelaufen ist wird die Drosseleinrichtung 29 auf Nenndurchfluss eingestellt. Die Drosseleinrichtung 29 kann z.B. einen Drosselschieber oder eine Drosselklappe beinhalten. Dieser kann durch verstellbare Anschläge oder durch eine durch einen Stellmotor 54 anzufahrende z.B. softwaremäßig festgelegte Position gegeben sein. Der Brenner erreicht dann seine Betriebsleistung. Während des gesamten Zündvorgangs bleibt die dem Brenner zugeführte Luftmenge unverändert. Wird ein langsames Übergehen von der Brennerstartleistung auf die Brennernennleistung gewünscht kann die Betätigungseinrichtung 34, die z.B. einen Drosselschieber 31 positioniert, entsprechend langsam betätigt werden. Die langsame Betätigung kann durch eine pneumatische oder hydraulische Bremsung eines Zugankers 38 des Drosselschiebers 31 oder durch eine entsprechende Ansteuerung des Stellmotors 54 erreicht werden.

## Patentansprüche

1. Gasventilanordnung (1), insbesondere zur Versorgung von Gasbrennern (3),
mit zumindest einem Absperrventil (6, 7), das an eine Steuereinrichtung (2) angeschlossen und durch ein von dieser geliefertes Steuersignal zu öffnen und zu schließen ist,
mit zumindest einem Druckregler (21), der mit dem Absperrventil (6, 7) in Serie angeordnet ist, um den Gasdruck auf einen vorgegebenen Wert einzuregulieren,
mit einer Drosseleinrichtung (29), die mit dem Druckregler (21) und dem Absperrventil (6, 7) in Serie angeordnet ist,
mit einer Betätigungseinrichtung (34), die an die Steuereinrichtung (2) angeschlossen ist, um von dieser zum Zünden des Brenners (3) verstellt zu werden.

2. Gasventilanordnung nach Anspruch 1, **dadurch gekennzeichnet, dass** die Betätigungseinrichtung (34) zumindest eine Zweipunktstelleinrichtung ist.

3. Gasventilanordnung nach Anspruch 1, **dadurch gekennzeichnet, dass** die Steuereinrichtung (2) die Drosseleinrichtung (29) zum Zünden des Brenners (3) in eine erste Drosselstellung (I) überführt, in der gerade die gewünschte Zündgasmenge durchgelassen wird.

4. Gasventilanordnung nach Anspruch 1, **dadurch gekennzeichnet, dass** die Steuereinrichtung (2) die Drosseleinrichtung (29) für den Betrieb des Brenners (3) in eine Freigabestellung (II) überführt, in der die für den Betrieb des Brenners (3) mit gewünschter Leistung erforderliche Gasmenge durchgelassen wird.

5. Gasventilanordnung nach Anspruch 1, **dadurch gekennzeichnet, dass** die Betätigungseinrichtung (34) ein Zugmagnet (35) ist.

6. Gasventilanordnung nach Anspruch 1, **dadurch gekennzeichnet, dass** die Drosselstellung (I) einstellbar ausgebildet ist.

7. Gasventilanordnung nach Anspruch 6, **dadurch gekennzeichnet, dass** zur Einstellung der Drosselstellung (I) eine Anschlagschraube (47) vorgesehen ist, die einem Drosselschieber (31) zugeordnet ist, der die Drosseleinrichtung (29) bildet oder zu dieser gehört.

8. Gasventilanordnung nach Anspruch 5, **dadurch gekennzeichnet, dass** der Zugmagnet (35) einen Zuganker (38) aufweist, der mit dem zu der Drosseleinrichtung (29) gehörigen Drosselschieber (31) verstellbar verbunden ist, um die Freigabestellung (II) des Drosselschiebers (31) einstellen zu können.

9. Gasventilanordnung nach Anspruch 8, **dadurch gekennzeichnet, dass** dem Zuganker (38) ein fester oberer Anschlag zugeordnet ist.

10. Gasventilanordnung nach Anspruch 5, **dadurch gekennzeichnet, dass** dem Zuganker (38) ein verstellbarer oberer Anschlag (52) zugeordnet ist, um die Freigabestellung des Drosselschiebers (31) einstellen zu können.

11. Gasventilanordnung nach Anspruch 1, **dadurch gekennzeichnet, dass** der Drosselschieber (31) mit einem Stellmotor (54) verbunden ist.

12. Gasventilanordnung nach Anspruch 11, **dadurch gekennzeichnet, dass** die Drosselstellung (I) und die Freigabestellung (II) innerhalb des Stellbereichs des Stellmotors (54) liegen, so dass der Drosselschieber (31) über beide Stellungen hinaus bewegbar ist.

13. Gasventilanordnung nach Anspruch 12, **dadurch gekennzeichnet, dass** die Steuereinrichtung (2) die Drosselstellung (I) und die Freigabestellung (II) Ansteuerung des Stellmotors (54) festlegt.

14. Gasventilanordnung nach Anspruch 11, **dadurch gekennzeichnet, dass** der Stellmotor (54) ein Schrittmotor ist.

15. Gasventilanordnung nach Anspruch 1, **dadurch gekennzeichnet, dass** die Steuereinrichtung (2) ein Zeitglied (49) enthält, das bei Empfang eines Startsignals aktiviert wird, um die Drosseleinrichtung (29) erst nach Ablauf einer festgelegten Zeitspanne, innerhalb derer das Öffnen des Absperrventils (6, 7) liegt, in Freigabestellung (II) zu überführen.

16. Gasventilanordnung nach Anspruch 15, **dadurch gekennzeichnet, dass** das Zeitglied (49) bei Empfang eines Startsignals aktiviert wird, um die Drosseleinrichtung (29) vor Öffnung des Absperrventils (6, 7) in Drosselstellung (I) zu überführen.

17. Gasventilanordnung nach Anspruch 1, **dadurch gekennzeichnet, dass** die Betätigungseinrichtung (34) die Drosseleinrichtung (29) in einer Schaltbewegung aus der Drosselstellung (I) in die Freigabestellung (II) überführt.

18. Gasventilanordnung nach Anspruch 1, **dadurch gekennzeichnet, dass** die Betätigungseinrichtung (34) die Drosseleinrichtung (29) in einer mehrstufigen Bewegung aus der Drosselstellung (I) in die Freigabestellung (II) überführt.

19. Gasventilanordnung nach Anspruch 1, **dadurch gekennzeichnet, dass** die Betätigungseinrichtung (34) die Drosseleinrichtung (29) in einer langsamen Gleitbewegung aus der Drosselstellung (I) in die Freigabestellung (II) überführt.

20. Gasventilanordnung nach Anspruch 1, **dadurch gekennzeichnet, dass** der Druckregler (21) zwischen dem Absperrventil (6, 7) und der Drosseleinrichtung (29) angeordnet ist.

21. Gasventilanordnung nach Anspruch 1, **dadurch gekennzeichnet, dass** als Absperrventil ein Doppelventil mit zwei Absperrventile (6, 7) vorgesehen sind, die in Serie angeordnet sind.
